Europäisches Patentamt

European Patent Office

Office européen des brevets

(19)

(11) Veröffentlichungsnummer: **0 148 747**
**B1**

(12) **EUROPÄISCHE PATENTSCHRIFT**

(45) Veröffentlichungstag der Patentschrift: 22.08.90

(21) Anmeldenummer: 85100068.7

(22) Anmeldetag: 03.01.85

(51) Int. Cl.⁵: **B 60 R 22/46**, B 60 R 22/42

(54) Sicherheitsgurtsystem.

(30) Priorität: 04.01.84 DE 3400115

(43) Veröffentlichungstag der Anmeldung:
**17.07.85 Patentblatt 85/29**

(45) Bekanntmachung des Hinweises auf die
Patenterteilung:
**22.08.90 Patentblatt 90/34**

(84) Benannte Vertragsstaaten:
**FR GB IT SE**

(56) Entgegenhaltungen:
**DE-A-2 710 358**
**DE-A-3 040 667**
**FR-A-2 323 405**
**FR-A-2 444 473**
**FR-A-2 494 997**
**GB-A-2 085 709**

(73) Patentinhaber: **AUTOFLUG GMBH**
**Industriestrasse 10 Postfach 1180**
**D-2084 Rellingen (DE)**

(72) Erfinder: **Sedlmayr, Gerhard, Dr.**
**Königgrätzstrasse 1**
**D-2000 Hamburg 52 (DE)**
Erfinder: **Just, Herbert**
**Bundesstrasse 1**
**D-2059 Hohnstorf (DE)**

(74) Vertreter: **Müller, Karl-Ernst, Dr. et al**
**Patentanwälte Becker & Müller**
**Eisenhüttenstrasse 2**
**D-4030 Ratingen 1 (DE)**

EP 0 148 747 B1

Courier Press, Leamington Spa, England.

## Beschreibung

Die Erfindung betrifft ein Sicherheitsgurtsystem, insbesondere für Kraftfahrzeuge, mit einem Dreipunkt-Sicherheitsgurt, einem an einem Fahrzeugaufbauteil befestigten selbstsperrenden Gurtaufroller sowie einer an dem Fahrzeugaufbauteil unter der Wirkung eines Antriebs beweglich angeordneten Klemmeinrichtung für das Gurtband mit wenigstens einer beweglichen Klemmbacke, wobei als Antrieb für die Klemmeinrichtung eine druckmittelbeaufschlagte Kolben-Zylinder-Einheit vorgesehen ist, deren Kolben über eine Kolbenstange mit der Klemmeinrichtung verbunden ist.

Bei Sicherheitsgurtsystemen mit einem Dreipunkt-Sicherheitsgurt und einem selbstsperrenden Gurtaufroller für die Blockierung des weiteren Gurtauszuges besteht im Falle eines Unfalls allgemein folgendes Problem: Wenn es zu einem Unfall kommt, geschieht die Blockierung des Gurtbandes herkömmlich im Gurtaufroller, also an einer Stelle, die verhältnismäßig weit von dem den Körper der angeschnallten Person berührenden Gurtabschnitt entfernt ist. Dies hat zur Folge, daß eine vergliechsweise große Gurtlänge zwischen der Blockierstelle und dem über den Körper der Person verlaufenden Gurtband vorhanden ist, deren unter dem Einfluß der bei einem Unfall auftretenden Kräfte erfolgende Dehnung zusätzlich zu der beim Anlegen des Gurtes entstehenden Gurtlose und zu der im Körperbereich der Person erfolgenden Gurtdehnung eine Verlängerung des Gurtbandes bewirkt.

Hinzu kommt eine weitere zusätzliche Gurtlängung durch den sogenannten Filmspuleneffekt im Gurtaufroller, der sich dadurch erklärt, daß der in mehr oder weniger dichten Windungen von der Aufrollfeder auf die diesbezügliche Welle aufgewickelte Gurt unter Anwendung entsprechender Kräfte noch wesentlich strammer aufgewickelt werden könnte, so daß bei normaler Wicklung durch starken Zug am Gurtband eine Verdichtung der vorgenommenen Gurtwicklung unter gleichzeitiger Freigabe einer entsprechenden Gurtlänge erfolgen muß.

Alles in allem ergibt sich somit eine beträchtliche Verlängerung des Gurtbandes, die im Unfallgeschehen eine den Insassen gefährdende Vorverlagerung des angeschnallten Körpers gestatten kann.

Aus der FR—PS 24 44 473 ist bereits ein gattungsgemäßes Sicherheitsgurtsystem bekannt, bei welchem eine Klemmeinrichtung im Auslösefall zu Beginn des Unfallgeschehens unter der Wirkung eines freigesetzten Druckmittels als Antrieb längs des die Klemmeinrichtung tragenden fahrzeugfesten Bauteils auf den Gurtaufroller zubewegt wird. Dabei ist durch die Gestaltung der Klemmeinrichtung dafür Sorge getragen, daß diese als Folge ihrer Bewegung das Gurtband einklemmt und so einen Strammeffekt hinsichtlich des den Körper der angeschnallten Person meist nicht eng genug umschließenden Gurtbandes herbeiführt.

Mit einer derartigen Anordnung ist jedoch der Nachteil verbunden, daß die betreffende Klemmeinrichtung jeweils erst dann ausgelöst wird, bzw. die Strammbewegung erst dann eingeleitet wird, wenn eine Teil des durch die Längsbewegung der Klemmeinrichtung vorgegebenen und damit zur Verfügung stehenden Strammwqeges bereits zurückgelegt ist, so daß bei den bekannten Sicherheitsgurtsystemen einerseits ein Gurtschlupf übrigbleibt, der aus der gegenüber dem Antrieb für die Klemmeinrichtung nachgeschalteten Klemmwirkung resultiert, und andererseits der zur Verfügung stehende Strammweg und damit die Effektivität der Strammeinrichtung überhaupt verringert werden.

Der Erfindung liegt daher die Aufgabe zugrunde, ein Sicherheitsgurtsystem der eingangs genannten Gattung derart zu verbessern, daß die durch die bewegliche Klemmeinrichtung hervorgerufene Strammbewegung besser ausnutzbar ist, so daß eine Vorwärtsverlagerung der angeschnallten Person weitgehend ausgeschlossen ist. Gleichzeitig soll die dazu erforderliche konstruktive Ausgestaltung der diesbezüglichen Teile des Sicherheitsgurtsystems einfach und in seiner Funktion sicher sein.

Die Lösung dieser Aufgabe ergibt sich aus dem Hauptanspruch; vorteilhafte Ausgestaltungen und Weiterbildungen sind in den Unteransprüchen angegeben.

Mit der Erfindung ist der Vorteil verbunden, daß durch die im Auslösefall zunächst eingeleitete Klemmwirkung der Klemmeinrichtung eine definierte einwandfreie Klemmung des Gurtbandes ohne jeden Schlupf gegeben ist, bevor der Strammvorgang durch die Bewegung der Klemmeinrichtung einsetzt, so daß der zur Verfügung stehende Strammweg voll ausnutzbar ist.

Weiterhin gestattet die erfindungsgemäße Lösung in vorteilhafter Weise einen getrennten Einbau von Strammer antrieb und Auslöseantrieb für die Klemmeinrichtung in die mit beengten Platzverhältnissen versehene B-Säule, was als weiterer Vorteil zu werten ist.

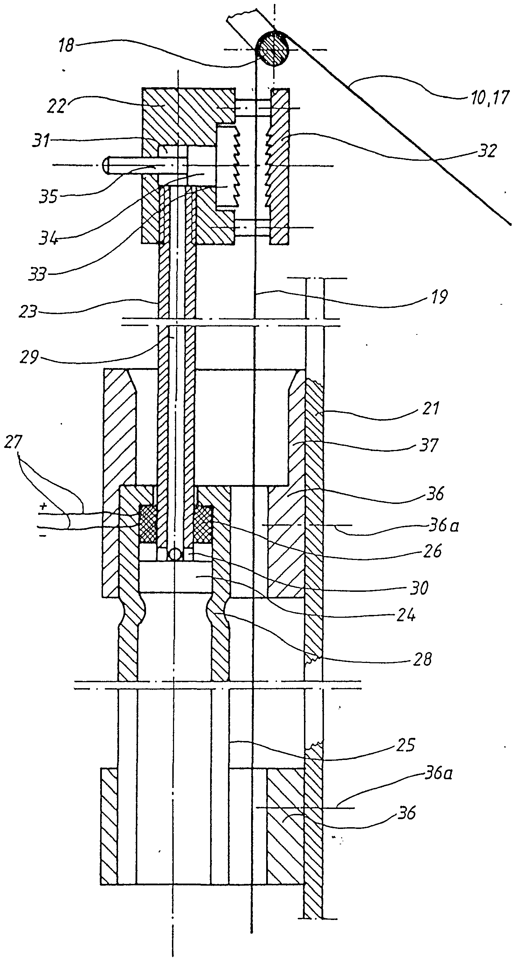

Bei dem anhand der Zeichnung erläuterten Ausführungsbeispiel der Erfindung ist als Antrieb für die Bewegung der Klemmeinrichtung längs des Fharzeugaufbauteils eine druckgasgetriebene Kolbeneinheit vorgesehen, deren Treibladung von einem mit dem Fahrzeug verbundenen Sensor ausgelöst wird. Dabei ist durch eine entsprechend vorgesehene gasdurchlässige Verbindung der Kolbeneinheit mit dem Betätigungsteil für die Klemmeinrichtung dadür gesorgt, daß auch die Klemmwirkung der Klemmeinrichtung mittelbar von dem Sensor ausgelöst wird, indem das von der Treibladung freigesetzte Gas zunächst über die gasdurchlässige Verbindung zum Antriebskolben für die Klemmeinrichtung geführt ist und erst nach Auslösung der Klemmeinrichtung der sich aufbauende Gasdruck den Kolben für die Bewegung der Klemmeinrichtung getreibt. Nach Beendigung des Strammvorganges rastet die Klemmeinrichtung dann in ein Verriegelungsgehäuse ein, damit nicht durch wieteren Zug am Gurtband bei gleichzeitigem Nachlassen des Gasdrucks im Antrieb für die Klemmeinrichtung die Blockierung des Gurtbandes gelöst wird.

Darüber hinaus erlaubt die Erfindung bei einer aktiven Auslösung der Klemmeinrichtung, den Blockiermechanismus des Gurtaufrollers wesentlich schwächer auszulegen, wenn nicht gar völlig auf diesen zu verzichten, da die gesamte durch die im Unfallgeschehen auftretende Vorwärtsverlagerung des Insassen ausgeübte Kraft nun von der Klemmeinrichtung aufgenommen wird und so der Gurtaufroller davon freigehalten ist. Damit ist eine vereinfachte, im Ergebnis leichtere und kostengünstigere Auslegung des Gurtaufrollers möglich. Damit könnte das gurtbandsensitive Blockiersystem im Gurtaufroller wegfallen, da die Blockierung des Gurtbandes durch den Fahrzeugsensor und die Klemmeinrichtung vorgenommen wird.

In der Zeichnung ist ein Ausführungsbeispiel der Erfindung wiedergegeben, welches nachstehende erläutert ist. Die einzige Figur zeigt eine Klemmeinrichtung mit Antrieb im Längsschnitt in schematischer Darstellung.

In der Zeichnung ist ein Sicherheitsgurt 10 abschnittsweise dargestellt, welcher mit einem senkrechten Gurtabschnitt 19 innerhalb einer B-Säule 21 eines nicht weiter dargestellten Kraftfahrzeuges verläuft, an einem in der B-Säule 21 angebrachten Umlenkbeschlag 18 umgelenkt wird und als Schultergurt 17 aus der B-Säule 21 austritt und von dieser weggeführt ist. Der umlenkbeschlag 18 ist konstruktiv getrennt von einer im Inneren der B-Säule 21 beweglich angeordneten Klemmvorrichtung 22 ausgebildet, wobei ergänzend auch eine Vorrichtung für die Höhenverstellung des Umlenkbeschlages 18 vorgesehen sein kann.

Die Klemmvorrichtung 22 ist am oberen Ende eine Kolbenstange 23 angebracht, an deren unteren Ende ein Kolben 24 sitzt, der seinerseits in einem Zylinder 25 eingeschlossen geführt ist. Die Länge der Kolbenstange 23 bzw. der Abstand zwischen Klemmeinrichtung 22 und dem Zylinder 25 ist durch das Maß der gewünschten Gurtstrammung bestimmt. In dem Bereich zwischen dem oberen Ende des Zylinders 25 und der durch die Ruhestellung des Kolbens 24 festgelegten Lage des Kolbens 24 ist eine Treibladung 26 angeordnet, die über Zuleitungen 27 mit einem sie auslösenden fahrzeugseitigen Sensor verbunden ist. Unterhalb des Kolbens 24 weist der Zylinder 25 noch eine Einschnürung 28 auf.

Die Kolbenstange 23 ist mit einer Längsmittenbohrung 29 sowie an ihrem unteren Ende am Ansatz des Kolbens 24 mit Querbohrungen 30 versehen. Am oberen Ende der Kolbenstange 23 mündet die Längsbohrung 29 in eine in der Klemmeinrichtung 22 ausgebildete Kolbenkammer 31 als Druckraum. Die Klemmeinrichtung 22 weist eine feste, in Erstreckung des Gurtbandes 19 angeordnete Klemmbacke 32 und eine quer dazu bewegliche Klemmbacke 33 auf, zwischen denen das Gurtband 19 geführt und einklemmbar ist. Hierzu weisen die Klemmbacken 32, 33 an ihren einander gegenüberliegenden Seiten eine Verzahnung auf.

Die bewegliche Klemmbacke 33 sitzt am vorderen Ende eines Kolbens 34, der in der Kolbenkammer 31 beweglich geführt ist. An seiner der Klemmbacke 33 abgewandten Seite ragt der Kolben 34 mit einer Kolbenstange 35 aus der Klemmeinrichtung 22 heraus.

Der Zylinder 25 ist mittels an seinem unteren und oberen Ende vorgesehener Beschläge 36 an der B-Säule 21 befestigt, wobei der untere Endbeschlag 26 bei ungünstigen Montageverhältnissen als weiterer Umlenkbeschlag für das vom Gurtaufroller herkommende Gurtband ausgebildet sein kann. Der obere Endbeschlag 36 setzt sich in ein nach oben offenes Verriegelungsbehäuse 37 fort, dessen Innenraum 38 so bemessen ist, daß die Klemmeinrichtung 22 bei ausgelöster Klemmwirkung mit aneinander anliegenden Klemmbacken 32, 33 in das Verriegelungsgehäuse 37 einschiebbar ist.

Die Klemmeinrichtung gemäß dem vorbeschriebenen Ausführungsbeispiel arbeitet wie folgt: Durch die vom Fahrzeugsensor ausgelöste Zündung der Treibladung 26 dehnt sich das entstehende Druckgas aus und tritt zunächst in der Querbohrungen 30 der Kolbenstange 23 ein, da der Kolben 24 aufgrund seiner Fixierung durch die Einschnürung 28 im Zylinder 25 noch nicht nach unten bewegbar ist. Eine weitere Sicherung gegen eine Verschiebung der Führungsstange 23 und damit der Klemmeinrichtung 22 nach unten ist in der im offenen Zustand der Klemmeinrichtung 22 aus dieser herausragenden Kolbenstange 35 des die bewegliche Klemmbacke 33 tragenden Kolbens 34 zu sehen, wobei die Kolbenstange 35 mit ihrem freien Ende in ein fahrzeugfestes Teil eingreift.

Das Druckgas wird über die Querbohrungen 30 und die Längsbohrung 29 in der Kolbenstange 23 zunächst in die als Druckraum zur Verfügung stehende Kolbenkammer 31 in der Klemmeinrichtung 22 geführt und drückt dort den Kolben 34 mit der Klemmbacke 33 in Richtung auf die Klemmbacke 32. Gleichzeitig bewegt sich die Kolbenstange 35 aus dem fahrzeugfesten Teil und wird bündig mit der Führungseinrichtung 22. Nach Abschluß der Bewegung des Kolbens 34 baut sich durch das nachströmende Gas ein solcher Druck auf, der anschließend den Kolben 24 über die Einschnürung 28 im Zylinder 25 hinaus nach unten bis in die Endstellung treibt. Auf diese Weise wird die Klemmeinrichtung 22 mit dem geklemmten Gurtband nach unten bis zum Eintritt in das Verriegelungsgehäuse 37 bewegt und das Gurtband so gestrammt. Das Verriegelungsgehäuse 37 ist so ausgebildet, daß die Klemmeinrichtung in ihrer Endstellung darin auch nach einem Abfall des Gasdruckes in der geklemmten Position gehalten wird.

Bei dem vorbeschrieben en Ausführungsbeispiel kann die Sicherung des Kolbens 24 mit Zylinder 25 anstelle der Einschnürung 28 auch durch andere Sperrmittel verwirklicht sein, beispielsweise durch den Kolben 24 mit der Wandung des Zylinders 25 verbindende Scherstifte, die bei Erreichen eines vorbestimmten Gasdrukkes auf den Kolben 24 abscheren und die Abwärtsbewegung des Kolbens 24 und damit die Strammung des Gurtbandes ermöglichen.

Das erfindungsgemäße Sicherheitsgurtsystem läßt sich schließlich vorteilhaft auch bei sogenannten sitzintegrierten Sicherheitsgurten verwirklichen, bei denen Gurtaufroller, Gurtschloß und die Gurtführung am Sitz selbst angebracht sind. In einem solchen Fall müssen auch die zusätzlichen Teile des Sicherheitsgurtsystems, nämlich die Klemmeinrichtung sowie deren Bewegungsbahn ebenfalls am Sitz vorgesehen sein, was jedoch keine wesentlich anderen konstruktiven Lösung als die im vorstehenden Anmeldungstext gezeigten erforderlich macht.

**Patentansprüche**

1. Sicherheitsgurtsystem mit Gurtstrammer, insbesondere für Kraftfahrzeuge, mit einem Dreipunkt-Sicherheitsgurt (10), einem an einem Fahrzeugaufbauteil (21) befestigten selbstsperrenden Gurtaufroller (20) sowie einer an dem Fahrzeugaufbauteil (21) unter der Wirkung eines Antriebs (23, 24, 25) beweglich angeordneten Klemmeinrichtung (22) für das Gurtband (19) mit wenigstens einer beweglichen Klemmbacke (33), wobei als Antrieb für die Klemmeinrichtung (22) eine druckmittelbeaufschlagte Kolben-Zylinder-Einheit (23, 24, 25) vorgesehen ist, deren Kolben (24) über eine Kolbenstange (23) mit der Klemmeinrichtung (22) verbunden ist, dadurch gekennzeichnet, daß zwischen dem Druckraum des die Strammbewegung bewirkenden Antriebes (Kolbenstange 23, Kolben 24, Zylinder 25) und einem Druckraum (Kolbenkammer 31) der druckmittelbeaufschlagten Klemmeinrichtung (22) eine gasdurchlässige Verbindung (Längsmittenbohrung 29) vorgesehen ist.

2. Sicherheitsgurtsystem nach Anspruch 1, wobei die Antriebseinheit aus einem in einem Zylinder beweglichen Kolben mit Kolbenstange und einer zwischen dem Rohrende und Kolben angeordneten Treibladung besteht, dadurch gekennzeichnet, daß die Kolbenstange (23) eine Längsmittenbohrung (29) und im Bereich ihres Ansatzes am Kolben (24) Querbohrungen (30) aufweist.

3. Sicherheitsgurtsystem nach Anspruch 2, dadurch gekennzeichnet, daß die Längsbohrung (29) an ihrem oberen Ende in den als Kolbenkammer (31) ausgebildeten Druckraum der Klemmeinrichtung (22) mündet, in welcher ein Kolben (34) quer zur Kolbenstange (23) beweglich angeordnet ist, der an seiner Außenseite eine Klemmbacke (33) trägt.

4. Sicherheitsgurtsystem nach Anspruch 3, dadurch gekennzeichnet, daß der Kolben (34) an seiner Rückseite eine in seiner Ruhelage aus der Klemmeinrichtung (22) herausragende und in dus den Antrieb (23, 24, 25) tragende fahrzeugfeste Teil eingreifende Kolbenstange (35) aufweist.

5. Sicherheitsgurtsystem nach einem der Ansprüche 1 bis 4, wobei der Zylinder mittels Beschlägen an dem Fahrzeugaufbau befestigt ist, dadurch gekennzeichnet, daß der obere Befestigungsbeschlag (36) als nach oben offenes Verriegelungsgehäuse (37) für die Klemmeinrichtung (22) ausgebildet ist, in welches die Klemmeinrichtung (22) bei geschlossenen Klemmbacken (32, 33) einschiebbar ist, wobei im Verriegelungsgehäuse (37) Sperrmittel zum Festhalten der Klemmeinrichtung (22) im Verriegelungsgehäuse (37) vorgesehen sind.

6. Sicherheitsgurtsystem nach Anspruch 2, dadurch gekennzeichnet, daß der Zylinder (25) unterhalb der Stellung des Kolbens (24) in Ruhelage mit einer Einschnürung (28) versehen ist.

7. Sicherheitsgurtsystem nach Anspruch 2, dadurch gekennzeichnet, daß der Kolben (24) in seiner Ruhelage über den Kolben (24) und die Wandung des Zylinders (25) durchgreifende Scherstifte gesichert ist.

**Revendications**

1. Système de ceinture de sécurité avec tendeur de ceinture, en particulier pour véhicules automobiles, comportant une ceinture de sécurité à trois points (10), un enrouleur de ceinture autobloquant (20), fixé sur un élément de carrosserie (21) du véhicule-ainsi qu'un dispositif de serrage (22) de la sangle de ceinture (19), placé mobile sur l'élément de carrosserie (21) du véhicule, sous l'effet d'un mécanisme d'entraînement (23, 24, 25), avec au moins une mâchoire de serrage (33) mobile, une unité à cylindre et piston (23, 24, 25) dont le piston (24) est relié par une tige de piston (23) au dispositif de serrage (22), étant prévue comme mécanisme d'entraînement pour le dispositif de serrage (22), caractérisé en ce qu'on prévoit, entre le compartiment de compression du mécanisme d'entraînement (tige de piston 23, piston 24, cylindre 25) entraînement le mouvement de tension et un compartiment de compression (chambre de piston 31) du dispositif de serrage (22), commandé par un fluide sous pression, une liaison perméable aux gaz (perçage central longitudinal 29).

2. Système de ceinture de sécurité selon la revendication 1, l'unité d'entraînement étant constituée d'un piston, déplaçable dans un cylindre, avec tige de piston et une charge propulsive placée entre l'extrémité du tube et le piston, caractérisé en ce que la tige de piston (23) présente un perçage central longitudinal (29) et, dans la région de son application sur le piston (24), des perçages transversaux (30).

3. Système de ceinture de sécurité selon la revendication 2, caractérisé en ce que le perçage longitudinal (29) débouche, à son extrémité supérieure, dans le compartiment de compression du dispositif de serrage (22), servant de chambre de piston (31) dans laquelle un piston (34) qui porte sur sa face extérieure une mâchoire de serrage (33), se déplace transversalement à la tige de piston (23).

4. Système de ceinture de sécurité selon la revendication 3, caractérisé en ce que le piston (34) présente, sur sa face arrière, une tige de piston (35) ressortant du dispositif de serrage (22), dans sa position de repos et s'engageant dans la partie solidaire du véhicule, portant le mécanisme d'entraînement (23, 24, 25).

5. Système de ceinture de sécurité selon l'une quelconque des revendications 1 à 4, dans lequel le cylindre est fixé sur la carrosserie du véhicule par des ferrures, caractérisé en ce que la ferrure de fixation supérieure (36) est un boîtier de verrouillage (37), ouvert vers le haut, pour le dispositif de serrage (22) dans lequel le dispositif de serrage (22) peut être introduit, lorsque les mâchoires de blocage (32, 33) sont fermées, des moyens de blocage étant prévus dans le boîtier de verrouillage (37), pour fixer le dispositif de serrage (22) dans le boîtier de verrouillage (37).

6. Système de ceinture de sécurité selon la revendication 2, caractérisé en ce que le cylindre (25) est pourvu d'un étranglement (28), au-dessous de la position du piston (34) en position de repos.

7. Système de ceinture de sécurité selon la revendication 2, caractérisé en ce que dans sa position de repos, le piston (24) est bloqué par des goujons à cisaillement placés au-dessus du piston (21) et traversant la paroi du cylindre (25).

## Claims

1. Safety belt system with belt tightening means, particularly for motor vehicles, having a three-point safety belt (10), self-locking belt reeling means (20) secured to a structural part (21) of the vehicle, and a clamping device (22) for the belt (19) movably mounted on the structural part (21) of the vehicle and acted upon by a drive (23, 24, 25), said clamping device (22) having at least one movable clamping jaw (33), the drive provided for the clamping device (22) being a piston/cylinder unit (23, 24, 25) acted upon by pressure medium, the piston (24) of which is connected to the clamping device (22) by means of a piston rod (23), characterised in that a gas-transmitting connection (central longitudinal bore 29) is provided between the pressure chamber of the drive (piston rod 23, piston 24, cylinder 25) which effects the tightening movement and a pressure chamber (piston chamber 31) of the clamping device (22) acted upon by pressure medium.

2. Safety belt system according to claim 1, wherein the drive unit consists of a piston with piston rod movable in a cylinder and a propellant charge disposed between the tube end and piston, characterised in that the piston rod (23) has a central longitudinal bore (29), and transverse bores (30) in the region of its attachment to the piston (24).

3. Safety belt system according to claim 2, characterised in that the longitudinal bore (29) opens, at its upper end, into the pressure chamber of the clamping device (22) in the form of a piston chamber (31), in which a piston (34) is arranged to be movable transversely with respect to the piston rod (23), said piston (34) having a clamping jaw (33) on the outside.

4. Safety belt system according to claim 3, characterised in that the piston (34) has, at the back, a piston rod (35) which protrudes from the clamping device (22) in the resting position and engages in the structural part which carries the drive (23, 24, 25).

5. Safety belt system according to one of claims 1 to 4, in which the cylinder is attached to the vehicle body by means of fittings, characterised in that the upper fixing (36) is constructed as an upwardly open locking housing (37) for the clamping device (22) into which the clamping device (22) can be inserted when the clamping jaws (32, 33) are closed, while the locking housing (37) contains locking means for holding the clamping device (22) securely in the locking housing (37).

6. Safety belt system according to claim 2, characterised in that the cylinder (25) has a constriction (28) below the position of the piston (24) in the resting position.

7. Safety belt system according to claim 2, characterised in that the piston (24) is secured in its resting position by means of shear pins which pass through the piston (24) and the walls of the cylinder (25).